# EUROPÄISCHE PATENTSCHRIFT

(11) **EP 0 869 483 B1**
(45) Veröffentlichungstag und Bekanntmachung des Hinweises auf die Patenterteilung: **05.06.2002**
(21) Anmeldenummer: 98105071.9
(22) Anmeldetag: 20.03.1998
(51) Int. Cl.: G11B 5/716

(54) **Magnetischer Aufzeichnungsträger**
Magnetic recording medium
Support d'enregistrement magnétique

(30) Priorität: 05.04.1997 DE 19714161
(43) Veröffentlichungstag der Anmeldung: 07.10.1998
(73) Patentinhaber: EMTEC Magnetics GmbH, 67059 Ludwigshafen (DE)
(72) Erfinder: Götz, Klaus, 67343 Neustadt (DE); Jakusch, Helmut, Dr., 67227 Frankenthal (DE); Loch, Werner, Dr., 82061 Neuried (DE); Hoffmann, Erich, 69126 Heidelberg (DE); Gottmann, Hans-Georg, 81249 München (DE); Jenor, Hans-Joachim, 81737 München (DE); Voit, Johann, Dr., 82205 Gilching (DE)

(56) Entgegenhaltungen:
- DE-A- 4 011 279
- DE-A- 4 132 275

## Beschreibung

Die Erfindung betrifft einen magnetischen Aufzeichnungsträger, bestehend aus einem nichtmagnetischen Schichtträger sowie mindestens zwei darauf aufgetragenen magnetischen Schichten, wobei beide Schichten als magnetisches Pigment magnetisierbare Metalloxide enthalten, wobei das aus kobalthaltigem FeOx bestehende magnetische Pigment der obersten Schicht einen höheren BET-Wert als das in der untersten Schicht enthaltene magnetische Pigment besitzt und wobei die Schichtdicke der obersten Schicht größer ist als die der untersten Schicht.

Insbesondere für HiFi-taugliche Audiobänder mit niedrigem Rauschen sind Aufzeichnungsträger der eingangs genannten gattungsmäßigen Art bereits bekannt. Dabei macht man sich die Tatsache zunutze, daß insbesondere niederfrequente Signale die Gesamtmagnetschicht durchmagnetisieren, während hochfrequente Signale weitgehend nur an der Bandoberfläche aufgezeichnet werden.

Die Aufzeichnungseigenschaften eines magnetischen Aufzeichnungsträgers werden im wesentlichen durch die Koerzitivkraft, die Remanenz und die Feinteiligkeit der eingesetzten magnetischen Pigmente bestimmt. So läßt sich der hochfrequente Signalpegel durch Anhebung der Koerzitivkraft, der niederfrequente Signalpegel durch Erhöhung der Remanenz und das Rauschverhalten durch zunehmende Feinteiligkeit des magnetischen Pigments in gewissen Grenzen verbessern. Da diese Pigmenteigenschaften an einer einzelnen Pigmentsorte jedoch nicht gleichermaßen stark ausgeprägt sein können, wird versucht, durch Kombination geeigneter Pigmente innerhalb einer einzelnen Magnetschicht oder durch Kombination von mehreren Magnetschichten mit unterschiedlichen Pigmentsorten die gewünschten Eigenschaften zu erreichen.

Die DE-OS 19 38 006 beschreibt ein Mehrschichtband mit Chromdioxid als Hauptbestandteil der oberen Schicht. Die Erfindung hat zum Ziel, das magnetostriktive Verhalten von körperdotierten Kobaltferritpigmenten in der unteren Schicht zu reduzieren. Es lassen sich nach der Angabe in dieser Schrift dadurch Audiobänder zum Beispiel für den IEC II-Arbeitspunkt herstellen.

In der DE 25 56188 werden verbesserte elektroakustische Eigenschaften durch Kombination von zwei Magnetschichten erzielt, wobei die zum unmagnetischen Schichtträger benachbarte Unterschicht ein Chromdioxid der BET-Oberfläche zwischen 15 und 25 m²/g und die obere Magnetschicht ein Chromdioxid der BET-Oberfläche von 26 - 36 m²/g enthält. Dadurch wird ein Audioband mit verbesserter Tiefenempfindlichkeit erreicht.

In der DE 31 48 769 wird ein Doppelschichtband beansprucht, welches in der Unterschicht eine Längsorientierung und in der Oberschicht eine Senkrechtorientierung der magnetischen nadelförmigen Pigmente aufweist.

Die DE 26 47 941 beschreibt ein mehrschichtig aufgebautes Band mit einer Oberschicht, bestehend aus einem Eisenoxid der Koerzitivkraft von 29 - 32 kA/m und mit einer Remanenz von kleiner als 0,15 mTesla und einer Unterschicht, bestehend aus einem magnetischen Pigment der Koerzitivkraft von 20 - 40 kA/m und einer Remanenz von größer als 15 mTesla. Hierbei wird ein Standard-Audioband mit verbesserten Rauscheigenschaften angestrebt.

Aus der DE 39 14 565 ist ein Doppelschichtband bekannt, bei welchem in der oberen Schicht als magnetisches Pigment CrO₂ mit mindestens 48,6 kA/m Koerzitivkraft und mit einem BET-Wert von mindestens 28 m²/g und bei dem in der Unterschicht ein nadelförmiger Kobalt-Ferrit mit einer Koerzitivkraft von 44 - 56 kA/m und einem BET-Wert von 26 - 34 m²/g vorhanden sind.

Des weiteren sind aus den Schriften DE 23 05 247, 24 34 940, 28 26 565, 30 04 771, 32 19 779, 35 14 649 sowie den europäischen Anmeldungen 0 090 052 und 0 090 053, doppelschichtig aufgebaute magnetische Aufzeichnungsträger bekannt, mit deren Aufbau die Wiedergabeeigenschaften verbessert werden sollen.

Untersuchungen der Anmelderin haben ergeben, daß der Ausgangspegel im mittleren Frequenzbereich bei vielen hochqualitativen Audiobändern des IEC-II-Typs im Vergleich zu den tiefen Frequenzen verringert ist, so daß es im besonderen in Verbindung mit dem Dolby-Rauschunterdrückungssystem zu hörbaren linearen Verzerrungen kommt.

Deswegen bestand die Aufgabe, einen Aufzeichnungsträger der eingangs genannten gattungsmäßigen Art zu finden, der in der oben genannten Eigenschaft deutlich verbessert ist, der einfach herzustellen ist und der außerdem in der Aussteuerbarkeit bei niedrigen und bei hohen Frequenzen deutlich verbessert ist.

Erfindungsgemäß wurde die Aufgabe gelöst mit einem Aufzeichnungsträger mit den im kennzeichnenden Teil der Ansprüche genannten Merkmalen.

Es hat sich überraschend gezeigt, daß die Schichtdicke der oberen Schicht im Bereich von 3,1 - 5 µm zu wählen ist, die der unteren Schicht im Bereich von 1,1 - 3 µm. Demgegenüber zeigt der überwiegende Teil der bisher bekannten doppelschichtig aufgebauten magnetischen Aufzeichnungsträger, daß die Schichtdicke der oberen Schicht im allgemeinen deutlich niedriger liegt als die der unteren Schicht. Zwar ist auch schon aus der DE-OS 40 11 279 ein im naß-naß-Verfahren aufgebauter Aufzeichnungsträger mit zwei magnetisierbaren Schichten bekannt, bei welchem die untere Schicht eine niedrigere Schichtdicke hat als die obere Schicht, jedoch scheint nach den Ausführungen der genannten Patentanmeldung die untere Schicht die Funktion einer sogenannten Grundierschicht zu haben, welche die Erzeugung der oberen dickeren Schicht erst ermöglicht; außerdem liegt die Schichtdicke dieser unteren Schicht im Bereich von 0,3 - 1 µm.

Ein erfindungsgemäß aufgebauter Aufzeichnungsträger besteht, wie aus den nachfolgenden Beispielen hervorgeht, aus einer oberen Schicht, welche als magnetisches Pigment ein kobalt-dotiertes Fe₂O₃ mit einer Koerzitivfeldstärke im Bereich von 55 - 60 kA/m und in der unteren Schicht ein ebenfalls kobalt-dotiertes Fe₂O₃ mit einer Koerzitivfeldstärke im Bereich von 50 - 55 kA/m enthält, wobei das Pigment der oberen Schicht einen BET-Wert von etwa 40 - 45 m²/g und das der unteren Schicht einen BET-Wert von 20 - 25 m²/g besitzt. Besonders günstige Eigenschaften werden mit einem Aufzeichnungsträger erzielt, bei welchem die Oberschicht das oben genannte kobalt-dotierte Fe₂O₃ mit den beschriebenen Eigenschaften enthält und wobei in der unteren Schicht als magnetisches Pigment CrO₂ mit einem BET-Wert von 20 - 25 m²/g und einem H_{c}-Wert in der Größenordnung von 40 - 50 kA/m zum Einsatz kommt. Die Schichtdicken der oberen Schicht bewegen sich dabei im Bereich von 3,1 - 5 µm und die der unteren Schicht im Bereich von 1,1-3 µm.

Die bevorzugten für die obere und die untere Schicht verwendeten ferromagnetischen Pulver sind Pulver von ferromagnetischen Eisenoxiden der allgemeinen Formel FeOx, bei denen x 1,33 bis 1,5 bedeutet, das heißt Maghemit (γ-Fe₂O₃, x = 1,5), Magnetit (Fe₃O₄, x = 1,33) und deren Berthollid-Verbindungen (FeOx, 1,33 < x < 1,5).

Solchen ferromagnetischen Eisenoxiden kann ein zweiwertiges Metall zugesetzt werden. Beispiele fiir zweiwertige Metalle sind diejenigen der Gruppen VI B, VII B, VIII, I B und II B des Periodensystems, wie zum Beispiel Cr, Mn, Co, Ni, Cu und Zn. Die Metalle werden in Mengen von etwa 0,5 bis etwa 20 Atomprozent, vorzugsweise 0,5 bis 10 Atomprozent, bezogen auf das Eisenmetall im Eisenoxid, zugegeben. Am meisten wird Kobalt von den genannten zweiwertigen Metallen bevorzugt. Wenn andere Metalle wie Cr, Mn, Ni, Cu und Zn zusammen mit Co zugegeben werden, wird die Menge der anderen Metalle so festgelegt, daß die Summe aus Co-Metall und anderen Metallen in den oben bezeichneten Bereich fällt.

Das Nadelform-Verhältnis des ferromagnetischen Eisenoxids beträgt vorzugsweise etwa 2:1 bis etwa 20:1, insbesondere mehr als 5:1, und seine Gesamtlänge ist vorzugsweise etwa 0,2 bis 2,0 µm

Verfahren zur Herstellung dieser ferromagnetischen Eisenoxide werden beispielsweise in den japanischen Patentveröffentlichungen 5009/64, 10307/64 und 39639/73 beschrieben.

Nadelförmige magnetische Chromdioxide, wie sie gemäß der besonders bevorzugten Ausführung in der unteren Schicht eingesetzt werden, lassen sich nach an sich bekannten Verfahren erhalten. Aus den Veröffentlichungen der gleichen Anmelderin seien insbesondere genannt die EP 0 027 640, 0 198 110, 0 217 352, 0 218 234, 0 238 713, 0 239 087, 0 239 087, 0 239 096, 0 268 093, 0 293 685, 0 304 851, 0 325 942, 0 355 755, 0 433 838, 548 642, die DE 40 05 21 sowie die DE 44 12 611.

Beispielsweise ist in der EP-A 0 027 640 die Herstellung von Chromdioxid durch eine unter hydrothermalen Bedingungen ablaufende Synproportionierung von Chrom(III)- und Chrom(VI)oxiden beschrieben. Dabei wird beispielsweise in einem zylindrischen Reaktor Wasser vorgelegt, unter Rühren Chromsäure eingetragen und gegebenenfalls Modifizierungsmittel wie Antimon, Selen, Tellur oder deren Verbindungen zugegeben. Unter weiterem Rühren wird dann Chrom(III)oxid in der für die Synproportionierungsreaktion erforderlichen stöchiometrischen Menge hinzugefügt. Die anschließende Bildung des Chromdioxids erfolgt durch Behandlung der Mischung im Hochdruckreaktor bei 100 bis 700 bar und 240 bis 500 °C. Nach 10 bis 50 Stunden ist die Reaktion zur Herstellung von CrO₂ beendet, und die Reaktoren werden in 4 bis 8 Stunden in einem zeitlich linearen Verlauf bis 0 bar entspannt. Anschließend wird das Chromdioxid mechanisch aus dem Reaktionsbecher entfernt und in bekannter Weise stabilisiert. Das so hergestellte Chromdioxid besteht aus nadelförmigen Teilchen mit einer durchschnittlichen Teilchenlänge von 0,1 bis 2,0 µm, insbesondere 0,4 bis 0,9 µm bei einem Längen-/Dicken-Verhältnis von etwa 15:1 und einer nach BET bestimmten spezifischen Oberfläche zwischen 20 und 25 m²/g.

Die sonstigen Eigenschaften des Chromdioxids sind ähnlich wie bei den Pigmenten, die fiir die bereits bekannten Chromdioxid-Magnetbänder eingesetzt werden. So lassen sich entsprechende Chromdioxid-Pigmente mit Koerzitivkräften von 32 bis 48 kA/m einsetzen. Zweckmäßigerweise werden für die untere Schicht Pigmente mit Koerzitivkräften von 40 - 55 kA/m und für die obere Schicht solche mit 55 - 60 kA/m verwendet (jeweils am Band gemessen).

Als besonders vorteilhaft fiir einen erfindungsgemäßen magnetischen Aufzeichnungsträger hat sich eine Unterschicht mit einem CrO₂-Pigment mit einer Koerzitivkraft von etwa 44 kA/m der Unterschicht und eine Oberschicht mit einem Co-Fe₂O₃-Pigment mit einer Koerzitivkraft von etwa 58 kA/m der Oberschicht herausgestellt.

Die Herstellung des erfindungsgemäßen magnetischen Aufzeichnungsträgers erfolgt in an sich bekannter Weise.

Als Bindemittel für die Dispersion des magnetischen Pigments können die für die Herstellung von Magnetschichten üblichen Bindemittel eingesetzt werden, wie Copolymere aus Vinylchlorid, Vinylacetat und Vinylalkohol, Copolymere aus Vinylidenchlorid und Acrylnitril, Polyvinylacetale wie Polyvinylformale, Polyester/Polyurethane, Polyurethan- oder Polyetherelastomere, Phenoxy- oder Epoxyharze.

Diese Bindemittel lassen sich einzeln oder in Kombination miteinander einsetzen und es können diesen Bindemitteln andere Zusätze zugegeben werden. Das gewichtsbezogene Mischungsverhältnis von Bindemittel zu ferromagnetischer Substanz ist derart, daß 8 bis 400 Gewichtsteile, vorzugsweise 10 bis 200 Gewichtsteile des Bindemitels auf 100 Gewichtsteile der ferromagnetischen Substanz kommen.

Geeignete Dispergiermittel sind Fettsäuren, die etwa 12 bis 18 Kohlenstoffatome enthalten und durch die allgemeine Formel R₁ COOH dargestellt werden, in der R₁ eine Alkylgruppe oder Alkenylgruppe mit etwa 11 bis 17 Kohlenstoffatomen ist, zum Beispiel Caprylsäure, Caprinsäue, Laurinsäure, Myristinsäure, Palmitinsäure, Stearinsäure, Ölsäure, Elaidinsäure, Linolsäure, Linolensäure, Stearolsäure und ähnliche, metallische Seifen, die Salze der Alkalimetalle (Li, Na, K usw.) oder Salze der Erdalkalimetalle (Mg, Ca, Ba usw.) und den vorstehend erwähnten Fettsäuren enthalten, fluorenthaltende Verbindungen der vorstehend erwähnten Fettsäureester, Amide der vorstehend erwähnten Fettsäuren, Polyalkylenoxid-Alkylphosphorsäureester, Lecithin, quaternäre Trialkylpolyolefinoxyammoniumsalze und ähnliche. In zusätzlicher Weise lassen sich höhere Alkohole mit 12 oder mehr Kohlenstoffatomen und deren Schwefelsäureester verwenden. Diese Dispergiermittel werden im allgemeinen in einem Anteil von etwa 1 bis 20 Gewichtsteile auf 100 Gewichtsteile des Bindemittels eingesetzt.

Geeignete Schmiermittel, die bei dem erfindungsgemäßen Aufzeichnungsmedium verwendbar sind, umfassen Siliconöle wie Dialkylpolysiloxane, Dialkoxypolysiloxane, Monoalkylmonoalkoxypolysiloxane, Phenylpolysiloxane und Fluoralkylpolysiloxane, feine elektrisch leitende Pulver wie Graphitpulver, feine anorganische Pulver, wie Molybdändisulfidpulver und Wolframdisulfidpulver, feine Kunststoffpulver, wie Polyethylen-, Polypropylen-, Ethylen-Vinylchlorid-Copolymerisat- und Polytetrafluorethylenpulver, α-Olefin-Polymerisate, bei normaler Temperatur flüssige ungesättigte aliphatische Kohlenwasserstoffe, in denen die Doppelbindung des n-Olefins an ein Endkohlenstoffatom gebunden ist (Anzahl des Kohlenstofatome: etwa 20), Fettsäureester, die aus monobasischen Fettsäuren mit C₁₂ - C₂₀ und monohydrischen Alkoholen mit C₃ - C₁₂ erhalten werden, und Fluorkohlenwasserstoffe. Diese Schmiermittel werden im allgemeinen in einem Anteil von etwa 0,2 bis 20 Gewichtsteile auf 100 Gewichtsteile des Bindemittels eingesetzt.

Typische Schleifmittel, die sich bei dem erfindungsgemäßen Aufzeichnungsträger verwenden lassen, umfassen Aluminiumoxid, Siliciumcarbid, Chrom(III) oxid (Cr₂O₃), Diamant, synthetischer Korund, Granat, Schmirgel (Hauptbestandteil: Korund und Magnetit) und ähnliche. Diese Abriebmittel weisen im allgemeinen eine Mohs'sche Härte von 5 oder mehr und eine mittlere Korngröße von 0,05 bis 5 µm, vorzugsweise 0,1 bis 2 µm auf und werden im allgemeinen in einem Anteil von 0,5 bis 20 Gewichtsteilen auf 100 Gewichtsteile des Bindemittels eingesetzt. In einer bevorzugten Ausführung ist das Schleifmittel lediglich in der oberen Schicht enthalten.

Bei dem erfindungsgemäßen Aufzeichnungsmedium verwendbare antistatische Mittel umfassen feine elektrisch leitende Pulver, wie Ruß und Rußpfropfpolymerisate, natürliche oberflächenaktive Mittel, wie Saponin, nichtionische oberflächenaktive Mittel, wie solche auf Alkylenoxidbasis, Glycerinbasis und Glycidolbasis, kationische oberflächenaktive Mittel, wie höhere Alkylamine, quaternäre Ammoniumsalze, heterocyclische Verbindungen, wie Pyridin und ähnliche, Phosphonium- oder Sulfoniumsalze und ähnliche, anionische oberflächenaktive Mittel, die Säuregruppen, wie Carbonsäure-, Sulfonsäure-, Phosphonsäure-, Sulfat-, Phosphatgruppen und ähnliche enthalten, und amphotere oberflächenaktive Mittel, wie Aminosäuren, Aminosulfonsäuren und Schwefelsäure- oder Phosphorsäureester von Aminoalkoholen und ähnliche.

Die vorstehend erwähnten feinen elektrisch leitenden Pulver werden im allgemeinen in einem Anteil von 0,2 bis 20 Gewichtsteilen auf 100 Gewichtsteile des Bindemittels gegeben und die oberflächenaktiven Mittel werden im allgemeinen in einem Anteil von 0,1 bis 10 Gewichtsteilen auf 100 Gewichtsteile des Bindemittels gegeben.

Diese oberflächenaktiven Mittel lassen sich einzeln oder in Kombination miteinander einsetzen. Sie werden im allgemeinen als antistatische Mittel, jedoch in einigen Fällen zu anderen Zwecken eingesetzt, zum Beispiel zum Verbessern der Dispergierbarkeit, der magnetischen Eigenschaften und der Schmiereigenschaften oder als Hilfsmittel zur Bildung des Überzugs.

Das magnetische Pulver wird in einer geeigneten Menge Lösemittel, einer geeigneten Menge eines Dispergierhilfsmittels und einer Bindemittelmischung intensiv vermischt und einer Vordispergierung unterzogen, was zum Beispiel an einem Dissolver, einem Kneter, einer Kolloidmühle, einer Kugelmühle oder anderen hochscherenden Aggregaten durchgeführt werden kann.

Die zweite Stufe der Dispergierung erfolgt nun beispielsweise in einer Perlmühle, deren Mahlintensität durch Variation der Mahlkörpergröße und -füllung, die Drehzahl und den Lackdurchsatz gesteuert werden kann.

Um eine möglichst enge Pigmentverteilungsbreite zu erhalten, wird vorzugsweise die magnetische Dispersion in mehreren Passagen von einem ersten Vorratsgefäß über eine oder mehrere beispielhaft genannte Perlmühlen in ein zweites Vorratsgefäß gefahren.

Nach Abschluß der Feindispergierstufe werden gegebenenfalls die restlichen Bindemittelanteile oder Additive der magnetischen Dispersion zugemischt.

Die anschließende Beschichtung des unmagnetischen Schichtträgers mit den magnetischen Dispersionen erfolgt entsprechend dem Stand der Technik zum Beispiel mittels Reverse-Roll-Coater, Rasterdruck-, oder Extrudergießer.

In einer besonders bevorzugten Ausführung der Erfindung werden beide Schichten unmittelbar aufeinanderfolgend ohne Zwischentrocknung, beispielsweise mit einem Doppelschlitzgießer aufgetragen, indem aus zwei nur wenige mm bis cm benachbarten Austrittsschlitzen die magnetischen Dispersionen auf den Schichtträger aufgebracht werden. Derartige Gießvorrichtungen sind beispielsweise in den DE-OS 42 26 138, 42 26 139 und 195 04 930 der gleichen Anmelderin beschrieben.

Ebenso kann aber auch der Auftrag im naß-trocken-Verfahren erfolgen, indem erst die untere Schicht auf den Schichtträger gegossen und getrocknet und dann anschließend die obere Schicht darauf gegossen wird.

Als Schichtträger können Folien aus Polyester, wie Polyethylenterephthalat, Polyethylennaphthalat, Polyolefine, wie Polypropylen, Cellulosederivate, wie Triacetat oder Polycarbonate eingesetzt werden. Die Dicke des Schichtträgers beträgt üblicherweise zwischen 5 - 150 µm.

Die weitere Bearbeitung der beschichteten Materialien, wie die Oberflächenglättung durch Kalandern, Schneiden und Konfektionieren, erfolgt in bekannter Weise.

Um die Vorteile des erfindungsgemäßen Vorgehens zu belegen, werden beispielhaft folgende Eigenschaften eines auf 3,81 mm getrennten Magnetbandes beschrieben.

Die Messung der speichertechnischen Kenngrößen der so hergestellten magnetischen Aufzeichnungsträger geschah stets im Vergleich zum Referenzband U 564 W (IEC II) der BASF.

Im einzelnen wurden gemessen (alle Angaben in dB):
- MOL =: Aussteuerbarkeit bei 315 Hz
- SOL =: Aussteuerbarkeit bei 10 kHz
- FM =: Empfindlichkeitsunterschied von 3150 Hz gegen 315 Hz
- FH =: Empfindlichkeitsunterschied von 10 kHz gegen 315 Hz
- BN =: bias noise
- KD =: Kopierdämpfung

### Beispiel 1

### (alle Angaben in Gewichtsteilen)

### a) Untere Schicht

| | |
|---|---|
| Co-dotiertes γ-Fe₂O₃ (BET 22 m²/g, H_{c} (am Band gemessen) 53,3 kA/m | 15 |
| Dispergator | 0,45 |
| Polyester-Polyurethan | 2,9 |
| Gleitmittel | 0,1 |
| Lösemittel (Tetrahydrofuran) | 28 |

### b) Obere Schicht

| | |
|---|---|
| Co-dotiertes γ-Fe₂O₃ (BET = 42 m²/g, H_{c} (am Band gemessen) 58,7 ka/m) | 14 |
| Gleitmittel | 1,04 |
| Al₂O₃ (Alox P 10 feinst) | 0,28 |
| Vinylpolymer | 0,7 |
| Polyester-Polyurethan | 1,3 |
| Dispergator | 0,5 |
| Lösemittel (Tetrahydrofuran) | 25 |

Die beiden Schichten wurden mittels eines Doppel-Extrudergießers im naß-naß-Verfahren so aufgetragen, daß die untere Schicht eine Trockenschichtdicke von 2 µm und die obere Schicht eine Trockenschichtdicke von 4 µm erhielt. Der PET-Schichtträger war 7 µm dick. Nach Trocknung und Kalandrierung wurde das Material in 3,81 mm Breite aufgeschnitten und in Compact-Cassetten des Philips-Typs konfektioniert.

### Beispiel 2

Es wurde verfahren wie in Beispiel 1, jedoch war das magnetische Pigment der unteren Schicht nadelförmiges CrO₂ mit einem BET-Wert von 21 m²/g und ein am Band gemessener H_{c} von 44,8 kA/m.

### Vergleichsbeispiel 1

Es wurde verfahren wie in Beispiel 2, jedoch war die Dicke der unteren Schicht 4 µm und die der oberen Schicht 2 µm.

### Vergleichsbeispiel 2

Es wurde lediglich die obere Schicht als Monolayer mit einer Trockendicke von 6 µm gegossen.

Die nachfolgende Tabelle zeigt die Ergebnisse der erfindungsgemäßen Beispiele und der Vergleichsbeispiele im Vergleich zu zwei handelsüblichen Aufzeichnungsträgern, alles bezogen jeweils auf das oben genannte Bezugsband.

**Tabelle**

| | **MOL** | **SOL** | **BN** | **KD** | **FM** | **FH** |
|---|---|---|---|---|---|---|
| Beispiel 1 | +1,5 | +2,2 | +3,5 | 50 | -0,1 | +1,2 |
| Beispiel 2 | +1,9 | +2,2 | +3,4 | 52 | -0,1 | +1,2 |
| Vergleichsbeispiel 1 | +2,1 | +1,3 | +2,0 | 53 | -0,6 | +0,7 |
| Vergleichsbeispiel 2 | +0,7 | +2,2 | +3,8 | 50 | 0 | +1,5 |
| Fuji Z II | +0,5 | +1,9 | +4,2 | 53,9 | -0,9 | +0,7 |
| TDK SA-X | +1,1 | +3,4 | +3,2 | 52,5 | -0,5 | +1,3 |

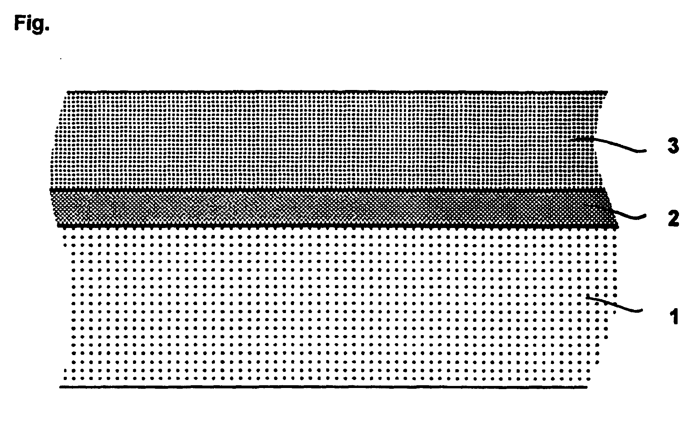

## Patentansprüche

1. Magnetischer Aufzeichnungsträger, bestehend aus einem nichtmagnetischen Schichtträger (1) sowie mindestens zwei darauf aufgetragenen magnetischen Schichten, wobei beide Schichten als magnetisches Pigment magnetisierbare Metalloxide enthalten, wobei das aus kobalthaltigem FeOx (1,33 ≤ x ≤ 1,5) bestehende magnetische Pigment der obersten Schicht (3) einen höheren BET-Wert besitzt als das in der untersten Schicht (2) enthaltene magnetische Pigment und wobei die Schichtdicke der obersten Schicht (3) größer ist als die der untersten Schicht, **dadurch gekennzeichnet, daß** die Schichtdicke der obersten Schicht (3) im Bereich von 3,1 - 5 µm und die der untersten Schicht (2) im Bereich von 1,1 - 3 µm liegt.

2. Magnetischer Aufzeichnungsträger nach Anspruch 1, **dadurch gekennzeichnet, daß** die Koerzitivfeldstärke der obersten Schicht 55 - 60 kA/m und die der untersten Schicht 50 - 55 kA/m beträgt.

3. Magnetischer Aufzeichnungsträger gemäß Anspruch 1, **dadurch gekennzeichnet, daß** das in der untersten Schicht enthaltene magnetische Pigment CrO₂ ist.

4. Magnetischer Aufzeichnungsträger nach Anspruch 3, **dadurch gekennzeichnet, daß** die Koerzitivfeldstärke der untersten Schicht 40 - 55 kA/m beträgt.

5. Magnetischer Aufzeichnungsträger nach Anspruch 1 bis 4, **dadurch gekennzeichnet, daß** die oberste Schicht zusätzlich ein unmagnetisches Pigment enthält.

6. Magnetischer Aufzeichnungsträger nach Anspruch 5, **dadurch gekennzeichnet, daß** das unmagnetische Pigment feinteiliges Al₂O₃ ist.

7. Magnetischer Aufzeichnungsträger nach den Ansprüchen 1 bis 6, **dadurch gekennzeichnet, daß** er als Audioband für den IEC-II-Arbeitspunkt verwendet wird.

## Claims

1. A magnetic recording medium consisting of a nonmagnetic substrate and at least two magnetic layers applied thereon, both layers containing magnetizable metal oxides as magnetic pigment, the magnetic pigment consisting of cobalt-containing FeOx (1.33 ≤ x ≤ 1.5) and present in the uppermost layer having a higher BET value than the magnetic pigment contained in the lowermost layer, and the layer thickness of the uppermost layer being greater than that of the lowermost layer, wherein the thickness of the uppermost layer is in the range of 3.1-5 µm and that of the lowermost layer is in the range of 1.1-3 µm.

2. A magnetic recording medium as claimed in claim 1, wherein the coercive force of the uppermost layer is 55-60 kA/m and that of the lowermost layer is 50-55 kA/m.

3. A magnetic recording medium as claimed in claim 1, wherein the magnetic pigment contained in the lowermost layer is CrO₂.

4. A magnetic recording medium as claimed in claim 3, wherein the coercive force of the lowermost layer is 40-55 kA/m.

5. A magnetic recording medium as claimed in any of claims 1 to 4, wherein the uppermost layer additionally contains a nonmagnetic pigment.

6. A magnetic recording medium as claimed in claim 5, wherein the nonmagnetic pigment is finely divided Al₂O₃.

7. A magnetic recording medium as claimed in any of claims 1 to 6, which is used as an audio tape for the IEC-II bias setting.

## Revendications

1. Support d'enregistrement magnétique, constitué d'un support de couches non magnétique, ainsi que d'au moins deux couches magnétiques déposées à sa surface, les deux couches contenant un oxyde métallique magnétisable comme pigment magnétique, le pigment magnétique de la couche supérieure, constitué de FeOx (1,33 ≤ x ≤ 1,5) contenant du cobalt, possédant une valeur de BET supérieure à celle du pigment magnétique de la couche la plus basse, et l'épaisseur de couche de la couche supérieure étant supérieure à celle de la couche la plus basse, **caractérisé en ce que** l'épaisseur de couche de la couche supérieure se situe dans une plage de 3,1 - 5 µm et celle de la couche la plus basse dans une plage de 1,1 - 3 µm.

2. Support d'enregistrement magnétique selon la revendication 1, **caractérisé en ce que** la force du champ coercitif de la couche supérieure vaut 55 - 60 kA/m et celle de la couche la plus basse 50 - 55 kA/m.

3. Support d'enregistrement magnétique selon la revendication 1, **caractérisé en ce que** le pigment magnétique contenu dans la couche la plus basse est du CrO₂.

4. Support d'enregistrement magnétique selon la revendication 3, **caractérisé en ce que** la force du champ coercitif de la couche la plus basse vaut 40 - 55 kA/m.

5. Support d'enregistrement magnétique selon les revendications 1 à 4, **caractérisé en ce que** la couche supérieure contient de plus un pigment non magnétique.

6. Support d'enregistrement magnétique selon la revendication 5, **caractérisé en ce que** le pigment non magnétique est de l'Al₂O₃ en fines particules.

7. Support d'enregistrement magnétique selon les revendications 1 à 6, **caractérisé en ce qu'**il est utilisé comme bande audio pour le point de fonctionnement IEC-II.
